# EUROPÄISCHE PATENTSCHRIFT

(11) **EP 3 778 403 B1**
(45) Veröffentlichungstag und Bekanntmachung des Hinweises auf die Patenterteilung: **26.07.2023**
(21) Anmeldenummer: 20170968.0
(22) Anmeldetag: 23.04.2020
(51) Int. Cl.: B64D 47/08, F16M 11/14, F16M 11/12, F16M 11/18, F16M 13/02, B64C 39/02, G02B 7/02, B64U 101/30

(54) **RICHTPLATTFORM FÜR EINE SENSOREINRICHTUNG, SENSORSYSTEM UND LUFTFAHRZEUG**
ALIGNMENT PLATFORM FOR A SENSOR DEVICE, SENSOR SYSTEM AND AIRCRAFT
PLATEFORME D'ALIGNEMENT POUR UN DISPOSITIF CAPTEUR, SYSTÈME DE CAPTEUR ET AÉRONEF

(30) Priorität: 12.08.2019 DE 102019005650
(43) Veröffentlichungstag der Anmeldung: 17.02.2021
(73) Patentinhaber: MBDA Deutschland GmbH, 86529 Schrobenhausen (DE)
(72) Erfinder: KLAFFERT, Thomas, 85356 Freising (DE)
(74) Vertreter: Isarpatent

(56) Entgegenhaltungen:
- US-A- 4 194 437
- US-A1- 2018 223 898

## Beschreibung

Die vorliegende Erfindung betrifft eine Richtplattform für eine Sensoreinrichtung, ein Sensorsystem mit einer solchen Richtplattform und Luftfahrzeug, welches ein Sensorsystem aufweist.

Optische Sensoren, Radarsensoren oder andere derartige Überwachungssensoren werden häufig in schwenkbaren Richtplattformen untergebracht. Beispielsweise kann es in Luftfahrzeugen, insbesondere in unbemannten Luftfahrzeugen wie Drohnen, Lenkflugkörpern oder dergleichen notwendig sein, eine Sensoreinrichtung um zumindest zwei Achsen schwenkbar zu lagern, um eine hinreichend große räumliche Abdeckung in Kombination mit einer hohen Bildauflösung zu realisieren. Insbesondere bei optischen Sensoren wie Kameras oder Infrarotsensoren ist der Öffnungswinkel eines Sehfelds des Sensors typischerweise abhängig von Sensorauflösung, Größe eines durch den Sensor erfassten Objekts und Entfernung des Objekts entsprechend seiner daraufhin angepassten Optik begrenzt. Um eine Abdeckung größerer räumlicher Winkelbereiche zu realisieren, besteht ein Bedarf nach einer möglichst schnellen und effektiven Scanbewegung. Ferner kann es notwendig sein, innerhalb vorgegebener Winkelbereiche zwischen beliebigen Bewegungszuständen sehr hohe Drehratenänderungen innerhalb kürzester Zeit mit möglichst hoher Winkelgenauigkeit zu erreichen.

Typischerweise werden zur Realisierung mehrachsiger Schwenkbewegungen von Überwachungssensoren kardanische Aufhängungen verwendet. Ferner beschreibt die US 7 459 834 B2 ein Gimbalsystem mit einem sphärischen Schwenkkörper, welcher in einer ebenfalls sphärischen Gehäuseschale gelagert und durch zwischen der Gehäuseschale und dem Schwenkkörper angeordneten Piezoaktuatoren bewegbar ist.

In der US 2018/0223898 A1 wird ein Gimbalsystem offenbart, welches einen Kugelkörper zur Anbringung einer elektronischen Vorrichtung wie einer Kamera oder eines Infrarotsensors aufweist, wobei an einer sphärischen Außenfläche des Kugelkörpers halbumlaufende Nuten ausgebildet sind, die jeweils eine Hemisphäre des Kugelkörpers umschlingen. Das Gimbalsystem weist ferner eine Basis auf, an welcher zwei einander gegenüberliegend angeordnete und um senkrecht aufeinander stehende Drehachse drehbare Zahnräder gelagert sind. Die Zahnräder greifen jeweils in die Nuten des Kugelkörpers ein, um diesen zu drehen.

Ein weiteres Gimbalsystem wird in der US 4 194 437 A beschrieben, wobei ein Körper mit einer sphärischen Außenfläche, an welcher zwei sich schneidende, auf senkrecht zueinander stehenden Großkreisen verlaufende Nuten ausgebildet sind, in einer halbkreisförmigen Lagerschale aufgenommen ist. In den Nuten sind Bänder mit daran ausgebildeten Zapfenelementen eingesetzt, um Fluidkammern zwischen dem jeweiligen Zapfenelement und einem Ende der jeweiligen Nut auszubilden. Über Auslässe in der Lagerschale sind die Fluidkammern befüllbar, um eine Drehung des Körpers auszulösen.

Es ist Aufgabe der vorliegenden Erfindung, mechanisch einfach und kompakt aufgebaute, robuste Lösungen zur schwenkbaren Lagerung von Sensoreinrichtungen bereitzustellen.

Diese Aufgabe wird durch eine Richtplattform mit den Merkmalen des Anspruchs 1 gelöst.

Gemäß einem ersten Aspekt der Erfindung ist eine Richtplattform für eine Sensoreinrichtung vorgesehen. Die erfindungsgemäße Richtplattform umfasst ein Gehäuse zur Aufnahme der Sensoreinrichtung mit einer sphärischen Außenoberfläche, in welcher auf einem ersten Großkreis ein erster Nutabschnitt und ein dem ersten Nutabschnitt gegenüberliegender zweiter Nutabschnitt und auf einem zu dem ersten Großkreis senkrecht stehenden zweiten Großkreis ein dritter Nutabschnitt und ein dem dritten Nutabschnitt gegenüberliegender vierter Nutabschnitt ausgebildet sind, wobei der erste Großkreis eine erste Drehachse definiert. Das Gehäuse definiert allgemein einen Aufnahmeraum oder Innenraum zur Aufnahme einer Sensoreinrichtung. Eine Außenoberfläche des Gehäuses ist zumindest teilweise kugelförmig oder kugelkalottenförmig, wobei auf einem ersten Großkreis der durch den sphärischen Bereich der Außenoberfläche definierten Kugel ein erster und ein zweiter Nutabschnitt ausgebildet sind, wobei der erste und der zweite Nutabschnitt z.B. als voneinander getrennte längliche Nuten ausgebildet sein können, die sich jeweils über einen Winkelbereich größer 0 Grad und kleiner 180 Grad erstrecken. Auf einem senkrecht zu dem ersten Großkreis stehenden zweiten Großkreis sind ein dritter und ein vierter Nutabschnitt ausgebildet. Der dritte und der vierte Nutabschnitt sind insbesondere symmetrisch bezüglich einer senkrecht auf den ersten und den zweiten Großkreis stehenden Symmetrieebene angeordnet und können als zwei getrennte Nuten, die sich jeweils über einen Winkel größer 0 Grad oder kleiner 90 Grad erstrecken oder als längliche Bereiche einer durchgehenden Nut realisiert sein, welche sich bezüglich der Symmetrieebene symmetrisch über einen Bereich von größer 0 Grad und kleiner 180 Grad erstreckt.

Die Richtplattform weist ferner eine Basis mit einer ersten Halterung und einer der ersten Halterung gegenüberliegend angeordneten zweiten Halterung, einen an der ersten Halterung angeordneten ersten Führungszapfen, welcher in den ersten Nutabschnitt eingreift, und einen koaxial zu dem ersten Führungszapfen an der zweiten Halterung angeordneten zweiten Führungszapfen auf, welcher in den zweiten Nutabschnitt eingreift, wobei der erste und der zweite Führungszapfen eine zweite Drehachse definieren. Demnach ist ein Rahmen bzw. ein Gestell mit einer ersten Halterung und einer ortsfest relativ zu der ersten Halterung angeordneten zweiten Halterung vorgesehen. Je Halterung ist jeweils ein Führungszapfen vorgesehen, wobei die Führungszapfen koaxial zueinander und ortsfest zu den Halterungen angeordnet sind und gemeinsam eine zweite Drehachse oder Nickachse definieren. Optional sind die Führungszapfen drehbar. Die Führungszapfen weisen vorzugsweise jeweils einen kreisförmigen Querschnitt auf. Die Führungszapfen greifen in den ersten und in den zweiten Nutabschnitt des Gehäuses ein, so dass bei einer Drehung des Gehäuses um die erste Drehachse, welche auch als Gierachse bezeichnet werden kann, die Führungszapfen in den ersten und zweiten Nutabschnitten gleiten können und das Gehäuse um die durch die Führungszapfen definierte zweite Drehachse drehbar ist.

Weiterhin umfasst die erfindungsgemäße Richtplattform eine um die zweite Drehachse drehbar an der ersten Halterung gelagerte erste Führungseinrichtung mit einer die zweite Drehachse zumindest teilweise umschließenden Auskragung, welche an einem die zweite Drehachse zumindest teilweise umschließenden Bereich der Außenoberfläche des Gehäuses anliegt, und einem an der Auskragung angeordneten ersten Eingriffsstück, welches in den dritten Nutabschnitt eingreift, und eine um die zweite Drehachse drehbar an der zweiten Halterung gelagerte zweite Führungseinrichtung mit einer die zweite Drehachse zumindest teilweise umschließenden Auskragung, welche an einem die zweite Drehachse zumindest teilweise umschließenden Bereich der Außenoberfläche des Gehäuses anliegt, und einem an der Auskragung angeordneten zweiten Eingriffsstück, welches in den vierten Nutabschnitt eingreift. Die Führungseinrichtungen sind somit jeweils als Formteile realisiert. Insbesondere kann die erste Führungseinrichtung einen optional hohlzylinderförmigen Lager- oder Basisabschnitt aufweisen, welcher an der ersten Halterung um die zweite Drehachse drehbar gelagert ist, und die zweite Führungseinrichtung kann ebenfalls einen optional hohlzylinderförmigen Lager- oder Basisabschnitt aufweisen, welcher an der zweiten Halterung um die zweite Drehachse gelagert ist. Eine Auskragung erstreckt sich von dem jeweiligen ersten oder zweiten Basisabschnitt aus von der zweiten Drehachse weg und umschließt diese zumindest teilweise. Die Auskragung kann somit beispielsweise kragen- oder trichterförmig gestaltet sein. Die Auskragungen der Führungseinrichtungen liegen jeweils bereichsweise an der sphärischen Außenoberfläche der Kugel an und legen die Position des Gehäuses entlang der zweiten Drehachse sowie in einer Richtung senkrecht zur zweiten Drehachse fest. An den Auskragungen sind ferner Eingriffselemente, z.B. in Form von Vorsprüngen, ausgebildet oder befestigt, welche in die dritten und vierten Nutabschnitte eingreifen. Wenn die Führungseinrichtungen in derselben Drehrichtung um die zweite Drehachse gedreht werden, wird das Gehäuse formschlüssig durch die Eingriffsstücke und Führungszapfen mitgenommen und damit um die zweite Drehachse gedreht. Bei gegensinniger Drehung der Führungseinrichtungen erfolgt ein verrollungsfreier Schwenk des Gehäuses senkrecht zur zweiten Drehachse um die erste Drehachse.

Ferner weist die Richtplattform eine kinematisch an die erste Führungseinrichtung gekoppelte erste Antriebseinrichtung zum Drehen der ersten Führungseinrichtung um die zweite Drehachse und eine kinematisch an die zweite Führungseinrichtung gekoppelte zweite Antriebseinrichtung zum Drehen der zweiten Führungseinrichtung um die zweite Drehachse auf. Die erste und die zweite Antriebseinrichtung sind dazu eingerichtet, die erste und die zweite Führungseinrichtung in derselben Drehrichtung zu drehen, um das Gehäuse um die zweite Drehachse zu drehen, und die erste und die zweite Führungseinrichtung in entgegengesetzten Drehrichtungen zu drehen, um das Gehäuse um die erste Drehachse zu drehen. Die Antriebseinrichtungen sind somit jeweils dazu eingerichtet

Gemäß einem zweiten Aspekt der Erfindung ist ein Sensorsystem, insbesondere für ein Luftfahrzeug, vorgesehen, welches eine Richtplattform nach dem ersten Aspekt der Erfindung und eine Sensoreinrichtung aufweist, welche in dem Gehäuse der Richtplattform aufgenommen ist.

Gemäß einem dritten Aspekt der Erfindung ist Luftfahrzeug mit einem Sensorsystem gemäß einem zweiten Aspekt der Erfindung.

Eine der Erfindung zugrundeliegende Idee besteht darin, eine zweiachsig verrollungsfrei schwenkbare Plattform bereitzustellen, wobei an einem sphärischen Gehäuse auf zwei senkrecht zueinander stehenden Großkreisen jeweils Nuten ausgebildet sind, wobei die auf dem ersten Großkreis ausgebildeten Nuten in Bezug auf eine senkrecht auf den ersten und den zweiten Großkreis enthaltenden Symmetrieebene angeordnet sind und die auf dem zweiten Großkreis ausgebildeten Nuten sich ebenfalls symmetrisch bezüglich der Symmetrieebene erstrecken. Das Gehäuse wird in zwei vorzugsweise baugleichen Führungseinrichtungen, welche beispielsweise hohlkegelförmige oder konkav kugelförmige Führungsschalen als Auskragungen aufweisen, aufgenommen, wobei die die Führungseinrichtungen koaxial gegenüberliegend angeordnet und um eine Nickachse drehbar gelagert sind an einem Gestell. Ein eineindeutiger und zugleich verrollungsfreier Zwangslauf wird erreicht, indem in jede der beiden auf dem ersten Großkreis der Plattform-Kalotte gegenüberliegenden Nuten von außen seitlich je ein Führungszapfen eingreift, wobei die Führungszapfen koaxial zueinander sowie zur Nickachse und somit auch zu den Führungseinrichtungen angeordnet sind. An den beiden Führungseinrichtungen ist jeweils ein Führungselemente angebracht, das beabstandet zu der Nickachse mit Orientierung in Richtung Mittelpunkt der Plattform-Kalotte angeordnet ist und in eine jeweilige auf dem zweiten Großkreis ausgebildete Nut eingreift. Bei gleichsinniger Drehung beider Führungseinrichtungen wird das Gehäuse formschlüssig durch die Führungselemente und Führungszapfen mitgenommen und es erfolgt eine Drehung des Gehäuses um die Nickachse. Bei gegensinniger Drehung beider Führungseinrichtungen erfolgt ein verrollungsfreier Schwenk des Gehäuses senkrecht zur Nickachse bzw. um die Gierachse. Die Führungseinrichtungen werden durch Antriebseinrichtungen gedreht. Damit wirken die Antriebseinrichtungen unabhängig voneinander über die Führungseinrichtungen auf das Gehäuse, wodurch eine Parallelkinematik realisiert wird.

Durch den sphärischen Aufbau des Gehäuses mit den auf den senkrecht zueinander stehenden Großkreisen, symmetrischen Nuten wird eine sehr kompakt aufgebaute und durch die Führungseinrichtung und die Führungszapfen auf mechanisch einfache Weise um zwei Achsen verschwenkbare Plattform realisiert. Insbesondere ist die Richtplattform als reine Parallelkinematik realisiert, wodurch sich sehr hohe Drehraten erzielen lassen. Durch die koaxiale Anordnung der Führungseinrichtungen und der Führungszapfen können Spiel, Toleranzen und thermische Effekte besonders einfach einachsig ausgeglichen werden. Ferner können die Führungszapfen durch den koaxialen, symmetrischen Aufbau die jeweils relativ kurz und die Führungseinrichtungen relativ kompakt gestaltet sein, so dass sich ein insgesamt sehr steifer Aufbau ergibt.

Vorteilhafte Ausgestaltungen und Weiterbildungen ergeben sich aus den auf die unabhängigen Ansprüche rückbezogenen Unteransprüchen in Verbindung mit der Beschreibung. Die zu einem Aspekt der Erfindung offenbarten Merkmale und Vorteile gelten jeweils auch für die anderen Aspekte als offenbart.

Gemäß einer Ausführungsform der Richtplattform ist vorgesehen, dass der erste und der zweite Nutabschnitt als Durchgangsöffnungen und der erste und der zweite Führungszapfen als Hohlwellen ausgebildet sind. Der erste und der zweite Nutabschnitt bilden somit Durchbrüche in den Innenraum des Gehäuses. Die Führungszapfen sind als Hohlschäfte realisiert bzw. weisen eine Durchgangsbohrung entlang deren Längsachse auf. Damit wird vorteilhaft eine Kabeldurchführung in den Innenraum des Gehäuses realisiert.

Gemäß einer weiteren Ausführungsform kann der erste Führungszapfen an der ersten Halterung befestigt sein und/oder der zweite Führungszapfen kann an der zweiten Halterung befestigt sein. Demnach kann der jeweilige Führungszapfen, vorzugsweise beide Führungszapfen an der jeweiligen Halterung befestigt oder ausgebildet sein.

Gemäß einer weiteren Ausführungsform kann der erste Führungszapfen an der ersten Führungseinrichtung vorgesehen sein, z.B. einstückig mit dieser ausgebildet sein, und/oder der zweite Führungszapfen kann an der zweiten Führungseinrichtung vorgesehen sein, z.B. einstückig mit der zweiten Führungseinrichtung ausgebildet sein. Somit können die Führungszapfen auch an der Führungseinrichtung befestigt oder einstückig mit dieser ausgebildet sein.

Gemäß einer weiteren Ausführungsform der Richtplattform kann vorgesehen sein, dass die Auskragung der ersten Führungseinrichtung einen Anlagebereich mit einer ersten Anlagefläche aufweist, welche an der Außenoberfläche des Gehäuses anliegt, und dass die Auskragung der zweiten Führungseinrichtung einen Anlagebereich mit einer zweiten Anlagefläche aufweist, welche an der Außenoberfläche des Gehäuses anliegt, wobei die erste Anlagefläche konisch oder konkav korrespondierend zu der Außenoberfläche gekrümmt ist, und wobei die zweite Anlagefläche konisch oder konkav korrespondierend zu der Außenoberfläche gekrümmt ist. Die Auskragungen der Führungseinrichtungen können damit eine sich konisch erstreckende Anlagefläche aufweisen, welche tangential an der sphärischen Außenfläche des Gehäuses anliegt. Hierbei ergibt sich eine Kontaktlinie zwischen der Außenfläche des Gehäuses und der Anlagefläche, wobei die Kontaktlinie die zweite Drehachse zumindest teilweise, vorzugsweise um mehr als 180 Grad umschließt. Dieser linienförmige Kontakt bietet den Vorteil, dass die Reibung zwischen der Anlagefläche und der Außenoberfläche relativ klein ist. Alternativ können die Auskragungen der Führungseinrichtungen eine korrespondierend zu der sphärischen Außenoberfläche gekrümmte Anlagefläche aufweisen. Demnach bilden die Anlageflächen eine Art Gelenkschale. Dies führt zu einer besonders zuverlässigen Stabilisierung des Gehäuses.

Gemäß einer weiteren Ausführungsform kann vorgesehen sein, dass das erste Eingriffsstück von der ersten Anlagefläche vorsteht und das zweite Eingriffsstück von der zweiten Anlagefläche vorsteht. Damit eine besonders gute Kraftübertragung durch das Eingriffsstück von der Auskragung auf das Gehäuse erzielt. Ferner wird die Steifigkeit des Systems weiter verbessert.

Gemäß einer weiteren Ausführungsform kann vorgesehen sein, dass das erste und das zweite Eingriffsstückjeweils eine sich durch einen Kugelmittelpunkt der Außenoberfläche des Gehäuses erstreckende Mittelachse aufweisen, und wobei das erste und das zweite Eingriffsstückjeweils derart angeordnet sind, dass deren Mittelachsen mit der zweiten Drehachse jeweils einen Winkel größer 0 Grad und kleiner 90 Grad einschließen. Durch den sich zwischen der zweiten Drehachse und der Mittelachse des jeweiligen Eingriffsstücks ergebenden Angriffswinkel wird die Übertragungscharakteristik bzw. die Übersetzung, mit welcher die Drehung der jeweiligen Führungseinrichtung um die zweite Drehachse in eine Drehung des Gehäuses um die erste Drehachse umgewandelt wird, und ein Schwenkbereich um die erste Drehachse festgelegt. Je größer der Angriffswinkel ist, desto größer ist der theoretisch erzielbare Schwenkbereich. Besonders vorteilhaft hat sich hierbei ein Angriffswinkel in einem Bereich größer 30 Grad und kleiner 60 Grad und insbesondere ein Winkel größer 38 Grad und kleiner 48 Grad herausgestellt. In diesen Bereichen wird ein relativ großer Schwenkbereich bei moderater Belastung des Antriebs der Führungseinrichtungen erzielt. Insbesondere bei einem Angriffswinkel zwischen 40 Grad und 42 Grad hat sich herausgestellt, dass Sprünge im Antriebsdrehmoment vorteilhaft vermieden werden. Dies erleichtert insbesondere bei elektrischen Antrieben die Regelung, wodurch das System insgesamt noch robuster und zuverlässiger wird.

Gemäß einer weiteren Ausführungsform kann der dritte Nutabschnitt einen V-förmigen Querschnitt aufweisen und das erste Eingriffsstück ist korrespondierend dazu konisch ausgebildet und/oder der vierte Nutabschnitt kann einen V-förmigen Querschnitt aufweisen und das zweite Eingriffsstück ist korrespondierend dazu konisch ausgebildet. Diese Gestaltung bietet den Vorteil, dass ein spielfreier Eingriff der Eingriffsstücke in die Nutabschnitte erleichtert wird.

Gemäß einer weiteren Ausführungsform kann vorgesehen sein, dass das erste Eingriffsstück und/oder das zweite Eingriffsstück in Richtung eines Kugelmittelpunkts der Außenoberfläche vorgespannt sind. Beispielsweise können die Eingriffsstücke entlang deren Mittelachse mittels einer Feder gegenüber der jeweiligen Auskragung in Richtung des Kugelmittelpunkts vorgespannt sein. Auch ist denkbar, dass die erste Führungseinrichtung einen aus einem elastisch verformbaren Material, insbesondere einem Kunststoffmaterial, gebildeten Vorspannungsbereich aufweist, in welchem das erste Eingriffsstück angeordnet ist, und relativ zu der Außenoberfläche derart positioniert ist, dass das erste Eingriffsstück durch den Vorspannungsbereich in Richtung des Kugelmittelpunkts der Außenoberfläche vorgespannt wird, und/oder wobei die zweite Führungseinrichtung einen aus einem elastisch verformbaren Material, insbesondere einem Kunststoffmaterial, gebildeten Vorspannungsbereich aufweist, in welchem das zweite Eingriffsstück angeordnet ist, und relativ zu der Außenoberfläche derart positioniert ist, dass das zweite Eingriffsstück durch den Vorspannungsbereich in Richtung des Kugelmittelpunkts der Außenoberfläche vorgespannt wird. Demnach können die Auskragungen der Führungseinrichtungen selbst Vorspanneinrichtungen, z.B. in Form von Federzungen bilden oder aufweisen, welche die Eingriffsstücke vorspannen. Beispielsweise kann vorgesehen sein, dass die Eingriffsstücke in einem durch zumindest zwei beabstandete Ausnehmungen und zumindest ein elastisches Filmscharnier bzw. Strukturgelenk begrenzten Vorspannungsbereich der Auskragung angeordnet sind. Dies bietet den Vorteil, dass keine zusätzlichen Vorspannmittel vorgesehen werden müssen, wodurch das Gewicht der Plattform vorteilhaft weiter reduziert wird. Die Vorspannung der Eingriffsstücke bietet allgemein den Vorteil, dass eine spielfreie Lagerung des Gehäuses erleichtert wird. Durch den symmetrischen Aufbau der Plattform wird dies weiter begünstigt.

Gemäß einer weiteren Ausführungsform kann die erste Führungseinrichtung entlang der zweiten Drehachse in Richtung eines Kugelmittelpunkts der Außenoberfläche vorgespannt sein, und/oder wobei die zweite Führungseinrichtung kann in Richtung des Kugelmittelpunkts der Außenoberfläche vorgespannt sein. Allgemein kann zumindest eine der Führungseinrichtungen entlang der zweiten Drehachse in Richtung der anderen Führungseinrichtung vorgespannt sein. Damit wird eine spielfreie Aufhängung des Gehäuses weiter erleichtert und z.B. in Folge thermischer Einflüsse entstehende Verformungen können noch leichter ausgeglichen werden.

Gemäß einer Ausführungsform des Sensorsystems kann vorgesehen sein, dass die Sensoreinrichtung einen optischen Sensor aufweist, z.B. einen bildgebenden Sensor, einen Infrarotsensor oder dergleichen. Damit eignet sich das Sensorsystem insbesondere zur Bilderfassung, zur Zielerfassung, für Aufklärungszwecke oder dergleichen.

Gemäß einer Ausführungsform des Luftfahrzeugs kann das Luftfahrzeug ein unbemanntes Luftfahrzeug sein, wie z.B. eine Drohne, ein Lenkflugkörper oder dergleichen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig. 1: eine perspektivische Ansicht eines Sensorsystems gemäß einem Ausführungsbeispiel der Erfindung;
- Fig. 2: eine Explosionsdarstellung einer Richtplattform gemäß einem Ausführungsbeispiel der Erfindung;
- Fig. 3: eine Teilexplosionsdarstellung des in Fig. 1 gezeigten Sensorsystems;
- Fig. 4: eine Schnittansicht des in Fig. 1 gezeigten Sensorsystems;
- Fig. 5: das Sensorsystem aus Fig. 1 in einer ersten Schwenkstellung eines Gehäuses, wobei das Gehäuse um eine Nickachse verschwenkt ist;
- Fig. 6: das Sensorsystem aus Fig. 1 in einer zweiten Schwenkstellung des Gehäuses, wobei das Gehäuse um die Nickachse verschwenkt ist;
- Fig. 7: das Sensorsystem aus Fig. 1 in einer dritten Schwenkstellung des Gehäuses, wobei das Gehäuse um eine Gierachse verschwenkt ist;
- Fig. 8: das Sensorsystem aus Fig. 1 in einer vierten Schwenkstellung des Gehäuses, wobei das Gehäuse um die Gierachse verschwenkt ist;
- Fig. 9: eine Detailansicht einer Auskragung einer Führungseinrichtung einer Richtplattform gemäß einem Ausführungsbeispiel der Erfindung, wobei ein an der Auskragung angeordnetes Eingriffselement durch eine durch die Auskragung gebildete Federzunge vorgespannt ist; und
- Fig. 10: eine schematische Ansicht eines Luftfahrzeugs gemäß einem Ausführungsbeispiel der Erfindung.

In den Figuren bezeichnen dieselben Bezugszeichen gleiche oder funktionsgleiche Komponenten, soweit nichts Gegenteiliges angegeben ist.

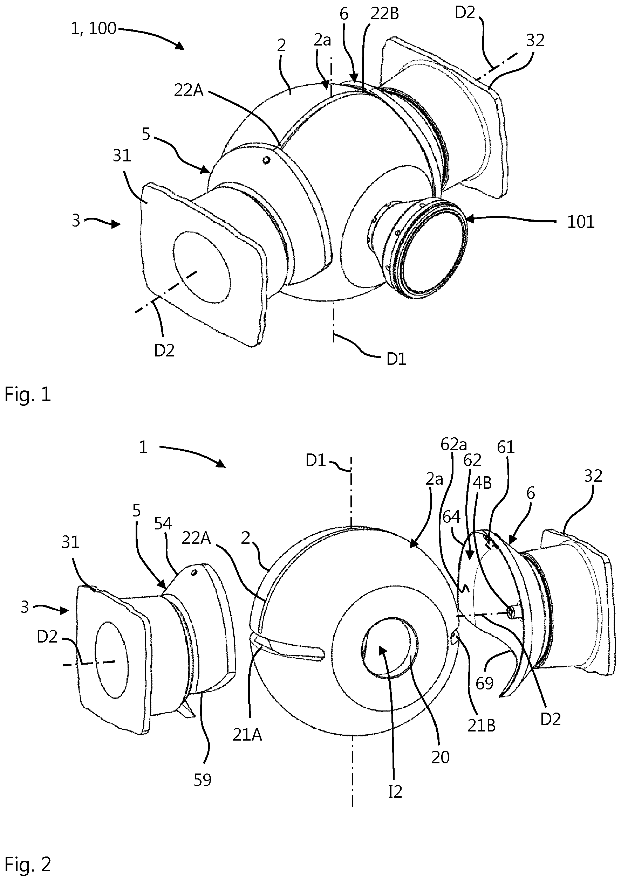

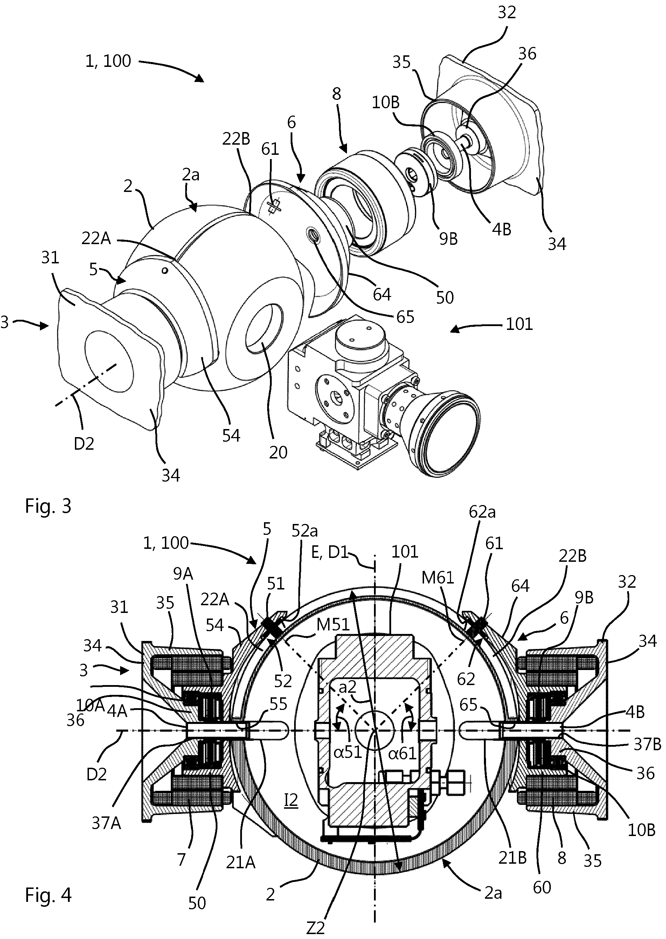

Fig. 1 zeigt beispielhaft ein Sensorsystem 100 mit einer Richtplattform 1 und einer Sensoreinrichtung 101. In Fig. 1 ist die Sensoreinrichtung 101 rein beispielhaft als Infrarotkamera realisiert. Selbstverständlich können auch andere Sensoren, wie z.B. allgemein optische Sensoren, Radarsensoren oder andere Überwachungssensoren vorgesehen sein. Fig. 2 zeigt eine teilweise Explosionsansicht der Richtplattform 1. In Fig. 3 ist eine weitere teilweise Explosionsansicht der Richtplattform 1 bzw. des Sensorsystems 100 insgesamt gezeigt. Fig. 4 zeigt eine Schnittansicht des Sensorsystems 100. Im Folgenden wird die Richtplattform 1 im Detail im Zusammenhang mit dem Sensorsystem 100 erläutert. Jedoch sind auch andere Anwendungen der Richtplattform unabhängig von einem Sensorsystem 100 denkbar.

Wie in Fig. 1 dargestellt ist, weist die Richtplattform 1 ein Gehäuse 2, eine Basis 3, eine erste Führungseinrichtung 5 und eine zweite Führungseinrichtung 6 auf. Wie insbesondere in den Fign. 2 bis 4 erkennbar ist, weist die Richtplattform 1 außerdem einen ersten Führungszapfen 4A, einen zweiten Führungszapfen 4B, eine erste Antriebseinrichtung 7 und eine zweite Antriebseinrichtung 8 auf. Wie in den Fign. 3 und 4 beispielhaft dargestellt ist, können ferner ein erster Drehwinkelgeber 9A und ein zweiter Drehwinkelgeber 9B vorhanden sein.

Das Gehäuse 2 definiert einen Innenraum I2, welcher zur Aufnahme der Sensoreinrichtung 101 dient. Insbesondere kann das Gehäuse 2 kugelkalottenförmig realisiert sein, wie dies in den Fign. 1 bis 4 beispielhaft dargestellt ist. Allgemein weist das Gehäuse 2 eine Außenoberfläche 2a mit einer sphärischen Krümmung auf. Die Außenoberfläche 2a definiert somit eine Kugelgeometrie mit einem Kugelmittelpunkt Z2 und einem Durchmesser a2, welcher z.B. in einem Bereich zwischen 30 mm und 180 mm, insbesondere in einem Bereich zwischen 80 mm und 120 mm liegen kann. Wie in den Fign. 1 bis 3 erkennbar ist, kann das Gehäuse 2 optional eine Frontöffnung 20 aufweisen, welche den Innenraum I2 mit der Umgebung verbindet. Die Frontöffnung 20 kann einen kreisförmigen Querschnitt aufweisen, wie dies in den Fign. 2 und 3 beispielhaft gezeigt ist, und dient vorteilhaft zur Durchführung eines Objektivs oder einer anderen Struktur der Sensoreinrichtung 101, wie in Fig. 1 erkennbar ist.

Das Gehäuse 2 kann beispielsweise aus einem Metallmaterial, wie z.B. einer Aluminiumlegierung gebildet sein.

Wie insbesondere in den Fign. 2 und 4 erkennbar ist, sind in der Außenoberfläche 2a des Gehäuses 2 auf einem ersten Großkreis ein erster Nutabschnitt 21A und ein diesem gegenüberliegender zweiter Nutabschnitt 21B ausgebildet. Wie in Fig. 4 erkennbar können der erste und der zweite Nutabschnitt 21A, 21B jeweils als Durchbrüche ausgebildet sein, welche sich zwischen der Außenoberfläche 2a und dem Innenraum I2 erstrecken. Ferner können der erste und der zweite Nutabschnitt 21A, 21B jeweils als zwei voneinander getrennte Nuten realisiert sein, die sich jeweils über einen vorbestimmten Winkelbereich auf dem ersten Großkreis erstrecken. Der erste Großkreis definiert eine erste Drehachse D1 des Gehäuses 2, wie nachfolgend noch im Detail erläutert wird.

Wie in den Fign. 2 und 4 weiterhin gezeigt ist, sind in der der Außenoberfläche 2a des Gehäuses 2 auf einem zweiten Großkreis, der senkrecht auf den ersten Großkreis senkrecht steht, ein dritter Nutabschnitt 22A und ein diesem gegenüberliegender vierter Nutabschnitt 22B ausgebildet. In den Fign. 1 bis 4 ist beispielhaft dargestellt, dass der dritte und der vierte Nutabschnitt 22A, 22B jeweils Abschnitte einer durchgehenden Nut sind. Selbstverständlich ist auch denkbar, dass der dritte und der vierte Nutabschnitt 22A, 22B als zwei voneinander getrennte Nuten realisiert sind, die sich jeweils über einen vorbestimmten Winkelbereich auf dem zweiten Großkreis erstrecken. Der dritte und der vierte Nutabschnitt 22A, 22B können z.B. als eine Vertiefung der Außenoberfläche 2a ausgebildet sein, wie dies in Fig. 4 beispielhaft dargestellt ist. Auch ist denkbar, den dritten und den vierte Nutabschnitt 22A, 22B als Durchbrüche zu realisieren. Optional können der dritte und/oder der vierte Nutabschnitt 22A, 22B einen V-förmigen Querschnitt aufweisen.

Wie aus den Fign. 2 und 4 erkennbar ist, sind die ersten und zweiten Nutabschnitte 21A, 21B und die dritten und vierten Nutabschnitte 22A, 22Bjeweils symmetrisch bezüglich einer senkrecht auf den ersten und den zweiten Großkreis stehenden Symmetrieebene E. Somit liegt der erste Nutabschnitt 21A dem zweiten Nutabschnitt 21B in Bezug auf die Symmetrieebene gegenüber. In Fig. 4 ist beispielhaft dargestellt, dass sich der dritte und der vierte Nutabschnitt 22A, 22B ebenfalls in Bezug auf die Symmetrieebene E einander gegenüber liegen. Jedoch ist auch denkbar, dass der dritte und der vierte Nutabschnitt 22A, 22B als zwei voneinander getrennte Nuten realisiert sind, die sich auf entgegengesetzten Seiten einer den ersten Großkreis enthaltenden Ebene und auf entgegengesetzten Seiten der Symmetrieebene E erstrecken.

Die Basis 3 dient zur Lagerung des Gehäuses 2 bzw. der Führungseinrichtungen 5, 6 und bildet allgemein eine ortsfeste Struktur. Wie in den Fign. 1 bis 4 dargestellt ist, weist die Basis 3 eine erste Halterung 31 und einer der ersten Halterung 31 gegenüberliegend angeordnete zweite Halterung 32 auf. Die Halterungen 31, 32 können insbesondere gleich aufgebaut sein. Die in den Fign. 1 bis 4 rein beispielhaft dargestellten Halterungen 31, 32 weisen jeweils einen plattenförmigen Basisabschnitt 34, einen sich von diesem aus erstreckenden Hülsenabschnitt 35 und einen innerhalb des Hülsenabschnitts 35 gelegenen, sich von dem Basisabschnitt aus 34 erstreckenden Lagerabschnitt 36 auf. Der Lagerabschnitt 36 der ersten Halterung 31 ist dem Lagerabschnitt 36 der zweiten Halterung 32 zugewandt orientiert.

Wie insbesondere in Fig. 4 erkennbar ist, ist der erste Führungszapfen 4A an der ersten Halterung 31 angeordnet. Insbesondere kann der erste Führungszapfen 4A, wie in Fig. 4 beispielhaft dargestellt, an der ersten Halterung 31 befestigt sein, beispielsweise in einer koaxial zu dem Lagerabschnitt 36 ausgebildeten Aufnahmeausnehmung 37A. Alternativ ist denkbar, dass der erste Führungszapfen 4A als Teil der ersten Führungseinrichtung 5 ausgebildet ist. Allgemein ist der erste Führungszapfen 4A ortsfest in Bezug auf die erste Halterung 31. Der erste Führungszapfen 4A kann insbesondere als Hohlzapfen oder Hohlwelle ausgebildet sein und weist vorzugsweise einen kreisförmigen Querschnitt auf. Wie in Fig. 4 dargestellt ist, ragt der erste Führungszapfen 4A in den ersten Nutabschnitt 21A des Gehäuses 2 hinein.

Wie in Fig. 4 weiterhin erkennbar ist, ist der zweite Führungszapfen 4B an der zweiten Halterung 32 angeordnet. Insbesondere kann der zweite Führungszapfen 4B, wie in Fig. 4 beispielhaft dargestellt an der zweiten Halterung 32 befestigt sein, beispielsweise in einer koaxial zu dem Lagerabschnitt 36 ausgebildeten Aufnahmeausnehmung 37B. Alternativ ist denkbar, dass der zweite Führungszapfen 4B als Teil der zweiten Führungseinrichtung 6 ausgebildet ist. Allgemein ist der zweite Führungszapfen 4B ortsfest in Bezug auf die zweite Halterung 32. Der zweite Führungszapfen 4B ist koaxial zu dem ersten Führungszapfen 4A angeordnet, so dass der erste und der zweite Führungszapfen 4A, 4B gemeinsam eine zweite Drehachse D2 oder Nickachse definieren, die senkrecht auf die erste Drehachse D1 oder Gierachse steht. Der zweite Führungszapfen 4B kann insbesondere als Hohlzapfen oder Hohlwelle ausgebildet sein und weist vorzugsweise einen kreisförmigen Querschnitt auf. Wie in Fig. 4 dargestellt ist, ragt der zweite Führungszapfen 4B in den zweiten Nutabschnitt 21B des Gehäuses 2 hinein.

Die erste Führungseinrichtung 5 weist einen Basisabschnitt 50 auf, welcher insbesondere in Form einer Hohlwelle realisiert sein kann, wie in Fig. 4 beispielhaft gezeigt, und eine Auskragung 54, welche sich von dem Basisabschnitt 50 aus erstreckt. Die Auskragung kann allgemein trichterförmig gestaltet sein und weist in einem axialen Endbereich, welcher einen ersten Anlagebereich 52 bildet, eine erste Anlagefläche 52a auf, welche zur Anlage an die sphärische Außenoberfläche 2a des Gehäuses 2 vorgesehen ist. Die erste Anlagefläche 52a kann insbesondere konisch gekrümmt sein, wie dies in Fig. 4 beispielhaft dargestellt ist. Alternativ kann die erste Anlagefläche 52a auch konkav korrespondierend zu der Außenoberfläche 2a gekrümmt sein.

Ferner ist an der Auskragung 54, vorzugsweise an der Anlagefläche 52a ein erstes Eingriffsstück oder Eingriffselement 51 vorgesehen. Das erste Eingriffsstück 51 kann einstückig mit der Auskragung 54 ausgebildet sein oder an der Auskragung 54 befestigt sein, z.B. in einer Ausnehmung, wie dies in Fig. 4 beispielhaft dargestellt ist. Das erste Eingriffsstück 51 steht an der durch die Anlagefläche 52a definierten Innenseite von der Auskragung 54 vor, vorzugsweise direkt von der Anlagefläche 52a und kann allgemein als ein eine Mittelachse M51 definierendes längliches Element realisiert sein. Beispielsweise kann das Eingriffsstück 51 einen korrespondierend zu einem V-förmigen Querschnitt des dritten Nutabschnitts 22A konisch ausgebildet sein.

Wie in Fig. 4 schematisch dargestellt ist, ist die erste Führungseinrichtung 5, insbesondere der Basisabschnitt 50 der ersten Führungseinrichtung 5 an der ersten Halterung 31 um die zweite Drehachse D2 drehbar gelagert. Dies kann beispielsweise über eine erste Lagereinrichtung 10A realisiert sein, welche zwischen dem Basisabschnitt 50 der ersten Führungseinrichtung 5 und dem Lagerabschnitt 37A der ersten Halterung 31 angeordnet ist. Insbesondere ist die erste Führungseinrichtung 5 koaxial zu der zweiten Drehachse D2 gelagert. Wie in Fig. 4 erkennbar ragt der erste Führungszapfen 4A durch eine im Basisabschnitt 50 vorgesehene Ausnehmung 55 hindurch. Alternativ kann der erste Führungszapfen 4A einstückig mit dem Basisabschnitt 50 der ersten Führungseinrichtung 5 ausgebildet sein. Wie in Fig. 4 außerdem dargestellt ist, liegt die erste Anlagefläche 52a der Auskragung 54 der ersten Führungseinrichtung 5 an der sphärischen Außenoberfläche 2a des Gehäuses 2 an, insbesondere in einem die zweite Drehachse D2 zumindest teilweise umschließenden Bereich der Außenoberfläche 2a des Gehäuses 2. Bei der in Fig. 4 beispielhaft dargestellten Richtplattform 1 ist die erste Anlagefläche 52a konisch ausgebildet, wodurch die erste Anlagefläche 52a tangential an der Außenoberfläche 2a des Gehäuses 2 anliegt und sich eine Kontaktlinie ergibt, welche die zweite Drehachse D2 zumindest teilweise umschließt. Das erste Eingriffsstück 51 greift in den dritten Nutabschnitt 22A ein.

Die zweite Führungseinrichtung 6 ist vorzugsweise in gleicher Weise aufgebaute wie die erste Führungseinrichtung 5 und weist einen Basisabschnitt 60 auf, welcher insbesondere in Form einer Hohlwelle realisiert sein kann, wie in Fig. 4 beispielhaft gezeigt, und eine Auskragung 64, welche sich von dem Basisabschnitt 60 aus erstreckt. Die Auskragung 64 kann allgemein trichterförmig gestaltet sein und weist in einem axialen Endbereich, welcher einen zweiten Anlagebereich 62 bildet, eine zweite Anlagefläche 62a auf, welche zur Anlage an die sphärische Außenoberfläche 2a des Gehäuses 2 vorgesehen ist. Die zweite Anlagefläche 62a kann insbesondere konisch gekrümmt sein, wie dies in Fig. 4 beispielhaft dargestellt ist. Alternativ kann die zweite Anlagefläche 62a auch konkav korrespondierend zu der Außenoberfläche 2a gekrümmt sein.

Ferner ist an der Auskragung 64 der zweiten Führungseinrichtung 6, vorzugsweise an der zweiten Anlagefläche 62a ein zweites Eingriffsstück oder Eingriffselement 61 vorgesehen. Das zweite Eingriffsstück 61 kann einstückig mit der Auskragung 64 ausgebildet sein oder an der Auskragung 64 befestigt sein, z.B. in einer Ausnehmung, wie dies in Fig. 4 beispielhaft dargestellt ist. Das zweite Eingriffsstück 61 steht an der durch die Anlagefläche 62a definierten Innenseite von der Auskragung 64 vor, vorzugsweise direkt von der Anlagefläche 62a und kann allgemein als ein eine Mittelachse M61 definierendes längliches Element realisiert sein. Beispielsweise kann das Eingriffsstück 61 einen korrespondierend zu einem V-förmigen Querschnitt des vierten Nutabschnitts 22B konisch ausgebildet sein.

Wie in Fig. 4 schematisch dargestellt ist, ist die zweite Führungseinrichtung 6, insbesondere der Basisabschnitt 60 der zweiten Führungseinrichtung 6 an der zweiten Halterung 32 um die zweite Drehachse D2 drehbar gelagert. Dies kann beispielsweise über eine zweite Lagereinrichtung 10B realisiert sein, welche zwischen dem Basisabschnitt 60 der zweiten Führungseinrichtung 6 und dem Lagerabschnitt 37B der zweiten Halterung 32 angeordnet ist. Insbesondere ist die zweite Führungseinrichtung 6 koaxial zu der zweiten Drehachse D2 gelagert. Wie in Fig. 4 erkennbar ragt der zweite Führungszapfen 4B durch eine im Basisabschnitt 60 vorgesehene Ausnehmung 65 hindurch. Alternativ kann der zweite Führungszapfen 4B einstückig mit dem Basisabschnitt 60 der zweiten Führungseinrichtung 6 ausgebildet sein. Wie in Fig. 4 außerdem dargestellt ist, liegt die zweite Anlagefläche 62a der Auskragung 64 der zweiten Führungseinrichtung 6 an der sphärischen Außenoberfläche 2a des Gehäuses 2 an, insbesondere in einem die zweite Drehachse D2 zumindest teilweise umschließenden Bereich der Außenoberfläche 2a des Gehäuses 2. Bei der in Fig. 4 beispielhaft dargestellten Richtplattform 1 ist die zweite Anlagefläche 62a konisch ausgebildet, wodurch die zweite Anlagefläche 62a tangential an der Außenoberfläche 2a des Gehäuses 2 anliegt und sich eine Kontaktlinie ergibt, welche die zweite Drehachse D2 zumindest teilweise umschließt. Das zweite Eingriffsstück 61 greift in den vierten Nutabschnitt 22B ein.

Die erste Führungseinrichtung 5 kann entlang der zweiten Drehachse D2 in Richtung des Kugelmittelpunkts Z2 der Außenoberfläche 2a vorgespannt sein. Alternativ oder zusätzlich kann die zweite Führungseinrichtung 6 in Richtung des Kugelmittelpunkts Z2 der Außenoberfläche 2a vorgespannt sein. Allgemein kann durch die Lagereinrichtungen 10A, 10B eine Fest-Loslagerung oder eine Stützlagerung realisiert werden.

Wie in Fig. 4 zudem erkennbar ist, sind das erste und das zweite Eingriffsstück 51, 61 jeweils derart orientiert, dass ihre Mittelachsen M51, M61 sich jeweils durch den Kugelmittelpunkt Z2 der Außenoberfläche 2a des Gehäuses 2 erstrecken. Ferner sind das erste und das zweite Eingriffsstück 51, 61 jeweils derart an der jeweiligen Auskragung 54, 64 angeordnet sind, dass deren Mittelachsen M51, M61 mit der zweiten Drehachse D2 jeweils einen gleich großen Angriffswinkel α51, α61 einschließen, welcher größer 0 Grad und kleiner 90 Grad ist. Insbesondere kann der Angriffswinkel α51, α61 größer 30 Grad und kleiner 60 Grad und vorzugsweise größer 38 Grad und kleiner 48 Grad sein, z.B. ein Winkel zwischen 40 Grad und 42 Grad.

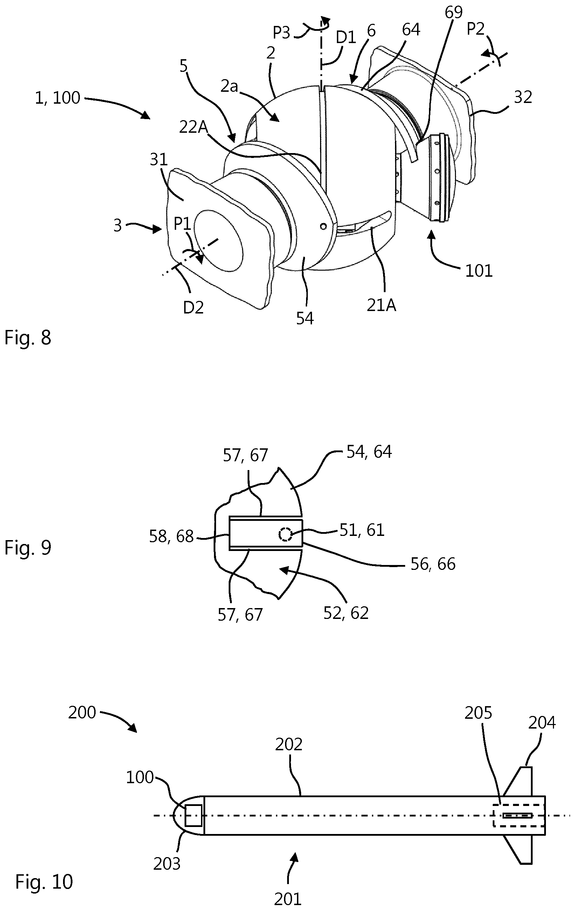

Optional sind das erste Eingriffsstück 51 und/oder das zweite Eingriffsstück 61 in Richtung des Kugelmittelpunkts Z2 der Außenoberfläche 2a vorgespannt. Hierzu kann beispielsweise eine Feder (nicht dargestellt) vorgesehen sein, welche sich an der jeweiligen Auskragung 54, 64 abstützt und das jeweilige Eingriffsstück51, 61 entlang dessen Mittelachse M51, M61 in Richtung des Kugelmittelpunkts Z2 vorspannt. Alternativ oder zusätzlich hierzu kann die Vorspannungskraft durch die jeweilige Führungseinrichtung 5, 6 selbst erzeugt werden, indem diese jeweils einen Vorspannungsbereich aus einem elastisch verformbaren Material, insbesondere einem Kunststoffmaterial, aufweisen, in welchem das jeweilige Eingriffsstück 51, 61 angeordnet ist. Die Vorspannungsbereich sind jeweils derart relativ zu der Außenoberfläche 2a positioniert sind, dass das erste bzw. das zweite Eingriffsstück 51, 61 in Richtung des Kugelmittelpunkts Z2 der Außenoberfläche 2a vorgespannt werden. In Fig. 9 zeigt beispielhaft eine mögliche Realisierung einer solchen Vorspannung durch die jeweilige Führungseinrichtung 5, 6 selbst. Insbesondere kann die jeweilige Auskragung 54, 64 eine Federzunge 56, 66 aufweisen. Diese kann, wie in Fig. 9 beispielhaft gezeigt, im Anlageabschnitt 52, 62 der jeweiligen Auskragung 5, 6 ausgebildet sein. Die Federzunge 56, 66 ist durch zwei sich entlang einander erstreckende, beabstandete Ausnehmungen oder Schlitze 57, 67 begrenzt und die Schlitze 57, 67 sind durch ein Filmscharnier 58, 68 verbunden. Das Eingriffselement 51, 61 ist an der Federzunge 56, 66 angeordnet und wird durch die Elastizität des Filmscharniers 58, 68 vorgespannt. Somit kann allgemein vorgesehen sein, dass die Eingriffsstücke 51, 61 in einem durch zumindest zwei beabstandete Ausnehmungen 57, 67 und zumindest ein elastisches Filmscharnier 58, 68 begrenzten Vorspannungsbereich der Auskragung 54, 64 angeordnet sind.

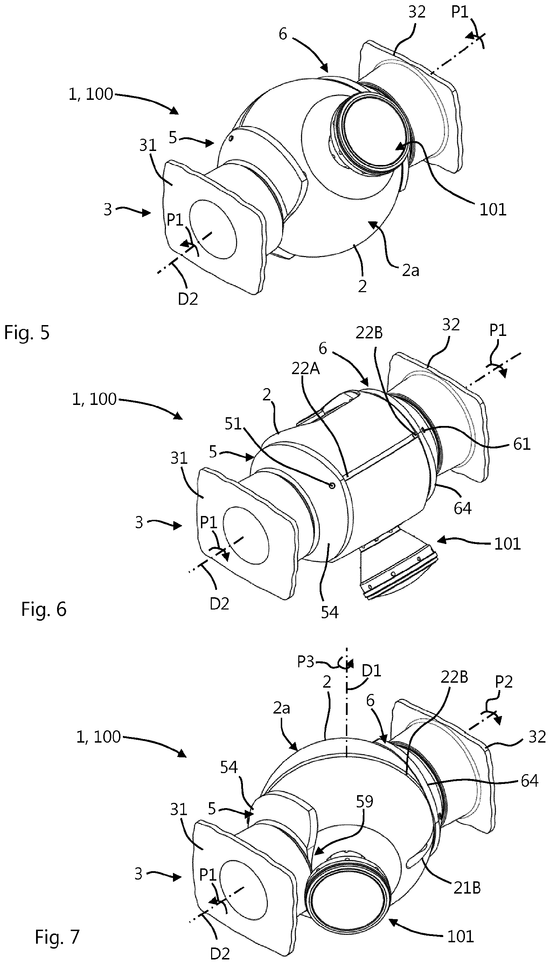

Die erste und die zweite Antriebseinrichtung 7, 8 können insbesondere als Elektromotoren, z.B. wie in den Fign. 3 und 4 schematisch dargestellt als Torque-Motoren realisiert sein. Wie in Fig. 4 schematisch und rein beispielhaft dargestellt ist, kann die erste Antriebseinrichtung 7 in dem Hülsenabschnitt 35 der ersten Halterung 31 aufgenommen sein. Beispielsweise kann ein Stator des Torque-Motors an dem Hülsenabschnitt 35 abgestützt bzw. befestigt sein und ein Rotor kann mit dem Basisabschnitt 50 der ersten Führungseinrichtung 5 verbunden sein, wodurch die erste Führungseinrichtung 5 mittels der ersten Antriebseinrichtung 7 um die zweite Drehachse D2 drehbar ist. In gleicher Weise kann die zweite Antriebseinrichtung 8 in dem Hülsenabschnitt 35 der zweiten Halterung 32 aufgenommen sein. Beispielsweise kann ein Stator des Torque-Motors an dem Hülsenabschnitt 35 abgestützt bzw. befestigt sein und ein Rotor kann mit dem Basisabschnitt 60 der zweiten Führungseinrichtung 6 verbunden sein, wodurch die zweite Führungseinrichtung 6 mittels der zweiten Antriebseinrichtung 8 um die zweite Drehachse D2 drehbar ist. Dadurch ergibt sich ein sehr kompakter Aufbau, bei welchem die Antriebseinrichtungen 7, 8 jeweils koaxial zu der zweiten Drehachse D2 angeordnet sind. Allgemein ist jedoch erste Antriebseinrichtung 7 kinematisch an die erste Führungseinrichtung 5 gekoppelt, um diese um die zweite Drehachse D2 zu drehen, und die zweite Antriebseinrichtung 8 ist kinematisch an die zweite Führungseinrichtung 6 gekoppelt, um diese um die zweite Drehachse D2 zu drehen. Die erste und die zweite Antriebseinrichtung 7, 8 sind jeweils unabhängig voneinander betätigbar und können unabhängig voneinander eine Drehung der Führungseinrichtungen 5, 6 in derselben oder in verschiedenen, entgegengesetzten Drehrichtungen erzeugen. Damit kann das Gehäuse 2jeweils verrollungsfrei um die Nickachse D2 und um die Gierachse D1 gedreht werden, wie dies nachfolgend unter Bezugnahme insbesondere auf die Fign. 5 bis 8 erläutert wird.

Um das Gehäuse 2 um die zweite Drehachse D2 zu drehen, werden die Antriebseinrichtungen 7, 8 so betätigt, dass diese die erste und die zweite Führungseinrichtung 5, 6 in derselben Drehrichtung um die zweite Drehachse bzw. Nickachse D2 drehen, wie dies in den Fign. 5 und 6 beispielhaft dargestellt ist, wobei die Drehrichtung jeweils durch den Pfeil P1 symbolisch angezeigt wird. Bei einer solchen gleichsinnigen Drehung der Führungseinrichtungen 5, 6 um die zweite Drehachse D2 wird das Gehäuse 2 formschlüssig durch die Eingriffsstücke 51, 61 mitgenommen und um die Führungszapfen 4A, 4B gedreht, was einem Direktantrieb um die zweite Drehachse D2 mit theoretisch unbegrenztem Drehwinkel entspricht.

Um das Gehäuses 2 um die erste Drehachse D1 bzw. um die Gierachse zu drehen, werden die, werden die Antriebseinrichtungen 7, 8 so betätigt, dass diese die erste und die zweite Führungseinrichtung 5, 6 in entgegengesetzten Drehrichtung um die zweite Drehachse bzw. Nickachse D2 drehen. In den Fign. 7 und ist symbolisch durch den Pfeil P1 eine Drehrichtung der ersten Führungseinrichtung 5 dargestellt und durch den Pfeil P2 eine entgegengesetzte Drehrichtung der zweiten Führungseinrichtung 6. Durch die Drehung in entgegengesetzten Richtungen, werden die Eingriffsstücke 51, 61 in entgegengesetzten Richtungen um die zweite Drehachse D2 bewegt und gleiten somit in dem dritten bzw. vierten Nutabschnitt 22A, 22B in Richtung des ersten Großkreises. Folglich wird das Gehäuse um die erste Drehachse bzw. Gierachse D1 gedreht, wie dies in den Fign. 7 und 8 jeweils durch den Pfeil P3 symbolisch dargestellt ist, wobei die Führungszapfen 4A, 4B in dem ersten bzw. zweiten Nutabschnitt 21A, 21B abgleiten.

Um den Schwenkwinkel um die erste Drehachse D1 zu vergrößern, wenn eine Struktur der Sensoreinrichtung 101 aus der Frontöffnung 20 des Gehäuses 2 herausragt, wie dies in den Fign. 1 und 3 bis 8 beispielhaft gezeigt ist, können an den Auskragungen 54, 64 der ersten und der zweiten Führungseinrichtungen 5, 6 jeweils Aussparungen 59, 69 ausgebildet sein, in welche die aus der Frontöffnung 20 des Gehäuses 2 herausragende Struktur hineingeschwenkt werden kann, wie dies in den Fign. 7 und 8 beispielhaft und schematisch dargestellt ist.

Fig. 10 zeigt beispielhaft ein Luftfahrzeug 200, welches das voranstehend beschriebene Sensorsystem 100 aufweist. Bei dem Luftfahrzeug 200 kann es sich insbesondere um ein unbemanntes Luftfahrzeug 200 handeln. Fig. 10 zeigt dementsprechend einen Lenkflugkörper 201 mit einem hülsenförmigen Rumpf 202, einem an einem ersten Ende des Rumpfs 202 angeordneten Suchkopf 203, an einem entgegengesetzten zweiten Ende des Rumpfs 202 angeordneten Steuerfinnen 204 und einem lediglich symbolisch dargestellten Antriebsmotor 205. Das Sensorsystem 100 kann insbesondere in dem Suchkopf 203 angeordnet sein und zur Erfassung oder Detektion von Objekten verwendet werden. Optional kann es sich bei dem Lenkflugkörper 201 um eine Rakete handeln, welche eine Sprengladung (nicht dargestellt) transportiert. Selbstverständlich kann der Lenkflugkörper 201 auch zu Aufklärungszwecken eingesetzt werden. Auch ist denkbar, dass das Luftfahrzeug 200 als ein unbemanntes, senkrecht startendes und landendes Kleinluftfahrzeug ausgebildet ist.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1: Richtplattform
- 2: Gehäuse
- 2a: Außenoberfläche des Gehäuses
- 3: Basis
- 4A: erster Führungszapfen
- 4B: zweiter Führungszapfen
- 5: erste Führungseinrichtung
- 6: zweite Führungseinrichtung
- 7: erste Antriebseinrichtung
- 8: zweite Antriebseinrichtung
- 9A: erster Drehwinkelgeber
- 9B: zweiter Drehwinkelgeber
- 10A: erste Lagereinrichtung
- 20: Frontöffnung
- 21A: erster Nutabschnitt
- 21B: zweiter Nutabschnitt
- 22A: dritter Nutabschnitt
- 22B: vierter Nutabschnitt
- 31: erste Halterung
- 32: zweite Halterung
- 34: Basisabschnitt der ersten oder der zweiten Halterung
- 35: Hülsenabschnitt der ersten oder der zweiten Halterung
- 36: Lagerabschnitt der ersten oder der zweiten Halterung
- 37A: Aufnahmeausnehmung der ersten Halterung
- 37B: Aufnahmeausnehmung der zweiten Halterung
- 50: Basisabschnitt der ersten Führungseinrichtung
- 51: erstes Eingriffsstück
- 52: Anlagebereich
- 52a: erste Anlagefläche
- 54: Auskragung der ersten Führungseinrichtung
- 55: Ausnehmung
- 56: Federzunge
- 57: Schlitze
- 58: Filmscharnier
- 59: Aussparung
- 60: Basisabschnitt der zweiten Führungseinrichtung
- 61: zweites Eingriffsstück
- 62: Anlagebereich
- 62a: zweite Anlagefläche
- 64: Auskragung der ersten Führungseinrichtung
- 65: Ausnehmung
- 66: Federzunge
- 67: Schlitze
- 68: Filmscharnier
- 69: Aussparung

- 100: Sensorsystem
- 101: Sensoreinrichtung
- 200: Luftfahrzeug
- 201: Lenkflugkörper
- 202: Rumpf
- 203: Suchkopf
- 204: Steuerfinnen
- 205: Antriebsmotor

- a2: Durchmesser
- D1: erste Drehachse
- D2: zweite Drehachse
- E: Symmetrieebene
- I2: Innenraum
- M51: Mittelachse des ersten Eingriffsstücks
- M61: Mittelachse des zweiten Eingriffsstücks
- P1: Pfeil, Drehrichtung
- Z2: Kugelmittelpunkt

## Patentansprüche

1. Richtplattform (1) für eine Sensoreinrichtung (101), aufweisend:
ein Gehäuse (2) zur Aufnahme der Sensoreinrichtung (101) mit einer sphärischen Außenoberfläche (2a), in welcher auf einem ersten Großkreis ein erster Nutabschnitt (21A) und ein diesem gegenüberliegender zweiter Nutabschnitt (21B) und auf einem zu dem ersten Großkreis senkrecht stehenden zweiten Großkreis ein dritter Nutabschnitt (22A) und ein diesem gegenüberliegender vierter Nutabschnitt (22B) ausgebildet sind, wobei der erste Großkreis eine erste Drehachse (D1) definiert;
eine Basis (3) mit einer ersten Halterung (31) und einer der ersten Halterung (31) gegenüberliegend angeordneten zweiten Halterung (32);
einen an der ersten Halterung (31) angeordneten ersten Führungszapfen (4A), welcher in den ersten Nutabschnitt (21A) eingreift;
einen koaxial zu dem ersten Führungszapfen (4A) an der zweiten Halterung (32) angeordneten zweiten Führungszapfen (4B), welcher in den zweiten Nutabschnitt (21B) eingreift, wobei der erste und der zweite Führungszapfen (4A; 4B) eine zweite Drehachse (D2) definieren;
eine um die zweite Drehachse (D2) drehbar an der ersten Halterung (31) gelagerte erste Führungseinrichtung (5) mit einer die zweite Drehachse (D2) zumindest teilweise umschließenden Auskragung (54), welche an einem die zweite Drehachse (D2) zumindest teilweise umschließenden Bereich der sphärischen Außenoberfläche (2a) des Gehäuses (2) anliegt, und einem an der Auskragung (54) angeordneten ersten Eingriffsstück (51), welches in den dritten Nutabschnitt (22A) eingreift;
eine um die zweite Drehachse (D2) drehbar an der zweiten Halterung (32) gelagerte zweite Führungseinrichtung (6) mit einer die zweite Drehachse (D2) zumindest teilweise umschließenden Auskragung (64), welche an einem die zweite Drehachse (D2) zumindest teilweise umschließenden Bereich der sphärischen Außenoberfläche (2a) des Gehäuses (2) anliegt, und einem an der Auskragung (64) angeordneten zweiten Eingriffsstück (61), welches in den vierten Nutabschnitt (22B) eingreift;
eine kinematisch an die erste Führungseinrichtung (5) gekoppelte erste Antriebseinrichtung (7) zum Drehen der ersten Führungseinrichtung (5) um die zweite Drehachse (D2); und
eine kinematisch an die zweite Führungseinrichtung (6) gekoppelte zweite Antriebseinrichtung (8) zum Drehen der zweiten Führungseinrichtung (6) um die zweite Drehachse (D2);
wobei die erste und die zweite Antriebseinrichtung (7; 8) dazu eingerichtet sind, die erste und die zweite Führungseinrichtung (5; 6) in derselben Drehrichtung zu drehen, um das Gehäuse (2) um die zweite Drehachse (D2) zu drehen, und die erste und die zweite Führungseinrichtung (5; 6) in entgegengesetzten Drehrichtungen zu drehen, um das Gehäuse (2) um die erste Drehachse (D1) zu drehen.

2. Richtplattform (1) nach Anspruch 1, wobei der erste und der zweite Nutabschnitt (21A; 21B) als Durchgangsöffnungen und der erste und der zweite Führungszapfen (4A; 4B) als Hohlwellen ausgebildet sind.

3. Richtplattform (1) nach Anspruch 1 oder 2, wobei der erste Führungszapfen (4A) an der ersten Halterung (31) befestigt ist und/oder der zweite Führungszapfen (4B) an der zweiten Halterung (32) befestigt ist.

4. Richtplattform (1) nach Anspruch 1 oder 2, wobei der erste Führungszapfen (4A) an der ersten Führungseinrichtung (5) befestigt oder einstückig mit dieser ausgebildet ist und/oder der zweite Führungszapfen (4B) an der zweiten Führungseinrichtung (6) befestigt oder einstückig mit dieser ausgebildet ist.

5. Richtplattform (1) nach einem der voranstehenden Ansprüche, wobei die Auskragung (54) der ersten Führungseinrichtung (5) einen Anlagebereich (52) mit einer ersten Anlagefläche (52a) aufweist, welche an der sphärischen Außenoberfläche (2a) des Gehäuses (2) anliegt, und die Auskragung (64) der zweiten Führungseinrichtung (6) einen Anlagebereich (62) mit einer zweiten Anlagefläche (62a) aufweist, welche an der sphärischen Außenoberfläche (2a) des Gehäuses (2) anliegt, wobei die erste Anlagefläche (52a) konisch oder konkav korrespondierend zu der sphärischen Außenoberfläche (2a) gekrümmt ist, und wobei die zweite Anlagefläche (62a) konisch oder konkav korrespondierend zu der sphärischen Außenoberfläche (2a) gekrümmt ist.

6. Richtplattform (1) nach Anspruch 5, wobei das erste Eingriffsstück (51) von der ersten Anlagefläche (52a) vorsteht und das zweite Eingriffsstück (61) von der zweiten Anlagefläche (62) vorsteht.

7. Richtplattform (1) nach einem der voranstehenden Ansprüche, wobei das erste und das zweite Eingriffsstück (51; 61) jeweils eine sich durch einen Kugelmittelpunkt (Z2) der sphärischen Außenoberfläche (2a) des Gehäuses (2) erstreckende Mittelachse (M51; M61) aufweisen, und wobei das erste und das zweite Eingriffsstück (51; 61) jeweils derart angeordnet sind, dass deren Mittelachsen (M51; M61) mit der zweiten Drehachse (D2) jeweils einen Winkel größer 0 Grad und kleiner 90 Grad, insbesondere größer 30 Grad und kleiner 60 Grad, und insbesondere bevorzugt einen Winkel größer 38 Grad und kleiner 48 Grad einschließen.

8. Richtplattform (1) nach einem der voranstehenden Ansprüche, wobei der dritte Nutabschnitt (22A) einen V-förmigen Querschnitt aufweist und das erste Eingriffsstück (51) korrespondierend dazu konisch ausgebildet ist, und/oder wobei der vierte Nutabschnitt (22B) einen V-förmigen Querschnitt aufweist und das zweite Eingriffsstück (61) korrespondierend dazu konisch ausgebildet ist.

9. Richtplattform (1) nach einem der voranstehenden Ansprüche, wobei das erste Eingriffsstück (51) und/oder das zweite Eingriffsstück (61) in Richtung eines Kugelmittelpunkts (Z2) der sphärischen Außenoberfläche (2a) vorgespannt sind.

10. Richtplattform (1) nach Anspruch 9, wobei die erste Führungseinrichtung (5) einen aus einem elastisch verformbaren Material, insbesondere einem Kunststoffmaterial, gebildeten Vorspannungsbereich aufweist, in welchem das erste Eingriffsstück (51) angeordnet ist, und relativ zu der sphärischen Außenoberfläche (2a) derart positioniert ist, dass das erste Eingriffsstück (51) durch den Vorspannungsbereich in Richtung des Kugelmittelpunkts (Z2) der sphärischen Außenoberfläche (2a) vorgespannt wird, und/oder wobei die zweite Führungseinrichtung (6) einen aus einem elastisch verformbaren Material, insbesondere einem Kunststoffmaterial, gebildeten Vorspannungsbereich aufweist, in welchem das zweite Eingriffsstück (61) angeordnet ist, und relativ zu der sphärischen Außenoberfläche (2a) derart positioniert ist, dass das zweite Eingriffsstück (61) durch den Vorspannungsbereich in Richtung des Kugelmittelpunkts (Z2) der sphärischen Außenoberfläche (2a) vorgespannt wird.

11. Richtplattform (1) nach einem der voranstehenden Ansprüche, wobei die erste Führungseinrichtung (5) entlang der zweiten Drehachse (D2) in Richtung eines Kugelmittelpunkts (Z2) der sphärischen Außenoberfläche (2a) vorgespannt ist, und/oder wobei die zweite Führungseinrichtung (6) in Richtung des Kugelmittelpunkts (Z2) der sphärischen Außenoberfläche (2a) vorgespannt ist.

12. Sensorsystem (100), insbesondere für ein Luftfahrzeug (200), aufweisend:
eine Richtplattform (1) nach einem der voranstehenden Ansprüche; und
eine Sensoreinrichtung (101), welche in dem Gehäuse der Richtplattform aufgenommen ist.

13. Sensorsystem (100) nach Anspruch 12, wobei die Sensoreinrichtung (101) einen optischen Sensor aufweist.

14. Luftfahrzeug (200) mit einem Sensorsystem (100) nach Anspruch 12 oder 13.

15. Luftfahrzeug (200) nach Anspruch 14, wobei das Luftfahrzeug (200) ein unbemanntes Luftfahrzeug (201) ist.

## Claims

1. Alignment platform (1) for a sensor device (101), comprising:
a housing (2) for receiving the sensor device (101), having a spherical outer surface (2a) in which a first groove portion (21A) and an opposite second groove portion (21B) are formed on a first great circle and a third groove portion (22A) and an opposite fourth groove portion (22B) are formed on a second great circle perpendicular to the first great circle, the first great circle defining a first axis of rotation (D1);
a base (3) having a first mounting (31) and a second mounting (32) arranged opposite the first mounting (31);
a first guide pin (4A), arranged on the first mounting (31) and engaging in the first groove portion (21A);
a second guide pin (4B), arranged coaxial with the first guide pin (4A) on the second mounting (32) and engaging in the second groove portion (21B), the first and second guide pin (4A; 4B) defining a second axis of rotation (D2);
a first guide device (5), mounted rotatable about the second axis of rotation (D2) on the first mounting (31) and having a collar (54), which encloses the second axis of rotation (D2) at least in part and is positioned on a region of the spherical outer surface (2a) of the housing (2), which region encloses the second axis of rotation (D2) at least in part, and having a first engagement piece (51), arranged on the collar (54) and engaging in the third groove portion (22A);
a second guide device (6), mounted rotatable about the second axis of rotation (D2) on the second mounting (32) and having a collar (64), which encloses the second axis of rotation (D2) at least in part and is positioned on a region of the spherical outer surface (2a) of the housing (2), which region encloses the second axis of rotation (D2) at least in part, and having a second engagement piece (61), arranged on the collar (64) and engaging in the fourth groove portion (22B);
a first drive device (7), kinematically coupled to the first guide device (5), for rotating the first guide device (5) about the second axis of rotation (D2); and
a second drive device (8), kinematically coupled to the second guide device (6), for rotating the second guide device (6) about the second axis of rotation (D2);
wherein the first and second drive device (7; 8) are set up to rotate the first and second guide device (5; 6) in the same direction of rotation so as to rotate the housing (2) about the second axis of rotation (D2) and to rotate the first and second guide device (5; 6) in opposite directions of rotation so as to rotate the housing (2) about the first axis of rotation (D1).

2. Alignment platform (1) according to claim 1, wherein the first and second groove portion (21A; 21B) are formed as through-openings and the first and second guide pin (4A; 4B) are formed as hollow shafts.

3. Alignment platform according to either claim 1 or claim 2, wherein the first guide pin (4A) is fixed to the first mounting (31) and/or the second guide pin (4B) is fixed to the second mounting (32).

4. Alignment platform (1) according to either claim 1 or claim 2, wherein the first guide pin (4A) is fixed to or formed integrally with the first guide device (5) and/or the second guide pin (4B) is fixed to or formed integrally with the second guide device (6).

5. Alignment platform (1) according to any of the preceding claims, wherein the collar (54) of the first guide device (5) has a contact region (52), having a first contact face (52a) which is positioned against the spherical outer surface (2a) of the housing (2), and the collar (64) of the second guide device (6) has a contact region (62), having a second contact face (62a) which is positioned against the spherical outer surface (2a) of the housing (2), the first contact face (52a) being conically or concavely curved in a manner corresponding to the spherical outer surface (2a), and the second contact face (62a) being conically or concavely curved in a manner corresponding to the spherical outer surface (2a).

6. Alignment platform (1) according to claim 5, wherein the first engagement piece (51) protrudes from the first contact face (52a) and the second engagement piece (61) protrudes from the second contact face (62).

7. Alignment platform (1) according to any of preceding claims, wherein the first and second engagement piece (51; 61) each have a central axis (M51; M61) which extends through a ball centre point (Z2) of the spherical outer surface (2a) of the housing (2), and wherein the first and second engagement piece (51; 61) are each arranged in such a way that the centre axes (M51; M61) thereof are each at an angle greater than 0 degrees and less than 90 degrees, in particular greater than 30 degrees and less than 60 degrees, and particularly preferably an angle greater than 38 degrees and less than 48 degrees, to the second axis of rotation (D2).

8. Alignment platform (1) according to any of the preceding claims, wherein the third groove portion (22A) has a V-shaped cross section and the first engagement piece (51) is formed conically in a manner corresponding thereto, and/or wherein the fourth groove portion (22B) has a V-shaped cross section and the second engagement piece (61) is formed conically in a manner corresponding thereto.

9. Alignment platform (1) according to any of the preceding claims, wherein the first engagement piece (51) and/or the second engagement piece (61) are biased towards a ball centre point (Z2) of the spherical outer surface (2a).

10. Alignment platform (1) according to claim 9, wherein the first guide device (5) has a bias region, which is formed from a resiliently deformable material, in particular a plastics material, and in which the first engagement piece (51) is arranged and is positioned relative to the spherical outer surface (2a) in such a way that the first engagement piece (51) is biased towards the ball centre point (Z2) of the spherical outer surface (2a) by the bias region, and/or wherein the second guide device (6) has a bias region, which is formed from a resiliently deformable material, in particular a plastics material, and in which the second engagement piece (61) is arranged and is positioned relative to the spherical outer surface (2a) in such a way that the second engagement piece (61) is biased towards the ball centre point (Z2) of the spherical outer surface (2a) by the bias region.

11. Alignment platform (1) according to any of the preceding claims, wherein the first guide device (5) is biased towards a ball centre point (Z2) of the spherical outer surface (2a) along the second axis of rotation (D2) and/or wherein the second guide device (6) is biased towards a ball centre point (Z2) of the spherical outer surface (2a).

12. Sensor system (100), in particular for an aircraft (200), comprising:
an alignment platform (1) according to any of the preceding claims; and
a sensor device (101) accommodated in the housing of the alignment platform.

13. Sensor system (100) according to claim 12, wherein the sensor device (101) has an optical sensor.

14. Aircraft (200) comprising a sensor system (100) according to either claim 12 or claim 13.

15. Aircraft (200) according to claim 14, wherein the aircraft (200) is an unmanned aircraft (201).

## Revendications

1. Plate-forme d'alignement (1) pour un dispositif de détection (101), présentant :
un boîtier (2) destiné à recevoir le dispositif de détection (101) et présentant une surface extérieure sphérique (2a) dans laquelle sont formés, sur un premier grand cercle, une première partie formant rainure (21A) et une deuxième partie formant rainure (21B) opposé à celle-ci et, sur un deuxième grand cercle perpendiculaire au premier grand cercle, une troisième partie formant rainure (22A) et une quatrième partie formant rainure (22B) opposé à celle-ci, le premier grand cercle définissant un premier axe de rotation (D1) ;
une base (3) comprenant un premier support (31) et un deuxième support (32) disposé à l'opposé du premier support (31) ;
un premier tourillon de guidage (4A) disposé sur le premier support (31), qui s'engage dans la première partie formant rainure (21A) ;
un deuxième tourillon de guidage (4B) disposé coaxialement au premier tourillon de guidage (4A) sur le deuxième support (32), qui s'engage dans la deuxième partie formant rainure (21B), le premier et le deuxième tourillon de guidage (4A ; 4B) définissant un deuxième axe de rotation (D2) ;
un premier dispositif de guidage (5) monté sur le premier support (31) de manière à pouvoir tourner autour du deuxième axe de rotation (D2), avec une saillie (54) entourant au moins partiellement le deuxième axe de rotation (D2), qui s'applique contre une zone de la surface extérieure sphérique (2a) du boîtier (2) entourant au moins partiellement le deuxième axe de rotation (D2), et une première pièce d'engagement (51) disposée sur la saillie (54), qui s'engage dans la troisième partie formant rainure (22A) ;
un deuxième dispositif de guidage (6) monté sur le deuxième support (32) de manière à pouvoir tourner autour du deuxième axe de rotation (D2), avec une saillie (64) entourant au moins partiellement le deuxième axe de rotation (D2), qui s'applique contre une zone de la surface extérieure sphérique (2a) du boîtier (2) entourant au moins partiellement le deuxième axe de rotation (D2), et une deuxième pièce d'engagement (61) disposée sur la saillie (64), qui s'engage dans la quatrième partie formant rainure (22B) ;
un premier dispositif d'entraînement (7) couplé cinématiquement au premier dispositif de guidage (5) pour faire tourner le premier dispositif de guidage (5) autour du deuxième axe de rotation (D2) ; et
un deuxième moyen d'entraînement (8) couplé cinématiquement au deuxième dispositif de guidage (6) pour faire tourner le deuxième dispositif de guidage (6) autour du deuxième axe de rotation (D2) ;
dans lequel le premier et le deuxième dispositif d'entraînement (7 ; 8) sont conçus pour faire tourner le premier et le deuxième dispositif de guidage (5 ; 6) dans le même sens de rotation afin de faire tourner le boîtier (2) autour du deuxième axe de rotation (D2), et pour faire tourner le premier et le deuxième dispositif de guidage (5 ; 6) dans des sens de rotation opposés afin de faire tourner le boîtier (2) autour du premier axe de rotation (D1) .

2. Plate-forme d'alignement (1) selon la revendication 1, dans laquelle la première et la deuxième partie formant rainure (21A ; 21B) sont réalisées sous la forme d'ouvertures continues et le premier et le deuxième tourillon de guidage (4A ; 4B) sous la forme d'arbres creux.

3. Plate-forme d'alignement (1) selon la revendication 1 ou 2, dans laquelle le premier tourillon de guidage (4A) est fixé au premier support (31) et/ou le deuxième tourillon de guidage (4B) est fixé au deuxième support (32).

4. Plate-forme d'alignement (1) selon la revendication 1 ou 2, dans laquelle le premier tourillon de guidage (4A) est fixé au premier dispositif de guidage (5) ou formé d'une seule pièce avec celui-ci et/ou le deuxième tourillon de guidage (4B) est fixé au deuxième dispositif de guidage (6) ou formé d'une seule pièce avec celui-ci.

5. Plate-forme d'alignement (1) selon l'une des revendications précédentes, dans laquelle la saillie (54) du premier dispositif de guidage (5) présente une zone d'application (52) avec une première surface d'application (52a) qui s'applique sur la surface extérieure sphérique (2a) du boîtier (2), et la saillie (64) du deuxième dispositif de guidage (6) présente une zone d'application (62) avec une deuxième surface d'application (62a) qui s'applique sur la surface extérieure sphérique (2a) du boîtier (2), la première surface d'application (52a) étant courbée de manière conique ou concave en correspondance avec la surface extérieure sphérique (2a), et la deuxième surface d'application (62a) étant courbée de manière conique ou concave en correspondance avec la surface extérieure sphérique (2a).

6. Plate-forme d'alignement (1) selon la revendication 5, dans laquelle la première pièce d'engagement (51) fait saillie de la première surface d'application (52a) et la deuxième pièce d'engagement (61) fait saillie de la deuxième surface d'application (62).

7. Plate-forme d'alignement (1) selon l'une des revendications précédentes, dans laquelle la première et la deuxième pièce d'engagement (51 ; 61) présentent chacune un axe médian (M51 ; M61) s'étendant à travers un centre de sphère (Z2) de la surface extérieure sphérique (2a) du boîtier (2), et dans laquelle la première et la deuxième pièce d'engagement (51 ; 61) sont respectivement disposées de telle sorte que leurs axes médians (M51 ; M61) forment avec le deuxième axe de rotation (D2) un angle supérieur à 0 degré et inférieur à 90 degrés, en particulier supérieur à 30 degrés et inférieur à 60 degrés, et de préférence un angle supérieur à 38 degrés et inférieur à 48 degrés.

8. Plate-forme d'alignement (1) selon l'une des revendications précédentes, dans laquelle la troisième partie formant rainure (22A) présente une section transversale en forme de V et la première pièce d'engagement (51) est réalisée de manière conique en correspondance avec celle-ci, et/ou dans laquelle la quatrième partie formant rainure (22B) présente une section transversale en forme de V et la deuxième pièce d'engagement (61) est réalisée de manière conique en correspondance avec celle-ci.

9. Plate-forme d'alignement (1) selon l'une des revendications précédentes, dans laquelle la première pièce d'engagement (51) et/ou la deuxième pièce d'engagement (61) sont précontraintes en direction d'un centre de sphère (Z2) de la surface extérieure sphérique (2a).

10. Plate-forme d'alignement (1) selon la revendication 9, dans laquelle le premier dispositif de guidage (5) présente une zone de précontrainte formée d'un matériau élastiquement déformable, en particulier d'un matériau plastique, dans laquelle la première pièce d'engagement (51) est disposée, et est positionné par rapport à la surface extérieure sphérique (2a) de telle sorte que la première pièce d'engagement (51) est précontrainte par la zone de précontrainte en direction du centre de sphère (Z2) de la surface extérieure sphérique (2a), et/ou dans lequel le deuxième dispositif de guidage (6) présente une zone de précontrainte formée d'un matériau élastiquement déformable, en particulier d'un matériau plastique, dans laquelle la deuxième pièce d'engagement (61) est disposée, et est positionné par rapport à la surface extérieure sphérique (2a) de telle sorte que la deuxième pièce d'engagement (61) est précontrainte par la zone de précontrainte en direction du centre de sphère (Z2) de la surface extérieure sphérique (2a).

11. Plate-forme d'alignement (1) selon l'une des revendications précédentes, dans laquelle le premier dispositif de guidage (5) est précontraint le long du deuxième axe de rotation (D2) en direction d'un centre de sphère (Z2) de la surface extérieure sphérique (2a), et/ou dans laquelle le deuxième dispositif de guidage (6) est précontraint en direction du centre de sphère (Z2) de la surface extérieure sphérique (2a) .

12. Système de détection (100), en particulier pour un aéronef (200), présentant :
une plate-forme d'alignement (1) selon l'une des revendications précédentes ; et
un dispositif de détection (101) qui est reçu dans le boîtier de la plate-forme d'alignement.

13. Système de détection (100) selon la revendication 12, dans lequel le dispositif de détection (101) présente un capteur optique.

14. Aéronef (200) comprenant un système de détection (100) selon la revendication 12 ou 13.

15. Aéronef (200) selon la revendication 14, dans lequel l'aéronef (200) est un aéronef sans pilote (201).
